Europäisches Patentamt

European Patent Office

Office européen des brevets

(19)

(11) **EP 1 615 364 A1**

(12) **EUROPEAN PATENT APPLICATION**
published in accordance with Art. 158(3) EPC

(43) Date of publication:
**11.01.2006 Bulletin 2006/02**

(51) Int Cl.:
**H04J 11/00** (1974.07)

(21) Application number: **04726742.2**

(22) Date of filing: **09.04.2004**

(86) International application number:
**PCT/JP2004/005110**

(87) International publication number:
**WO 2004/093360 (28.10.2004 Gazette 2004/44)**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **11.04.2003 JP 2003108306**

(71) Applicant: **MATSUSHITA ELECTRIC INDUSTRIAL
CO., LTD.
Kadoma-shi, Osaka 571-8501 (JP)**

(72) Inventors:
• **MATSUMOTO, Atsushi**

  **(JP)**
• **MIYOSHI, Kenichi**

  **(JP)**

(74) Representative: **Grünecker, Kinkeldey,
Stockmair & Schwanhäusser
Anwaltssozietät
Maximilianstrasse 58
80538 München (DE)**

(54) **RADIO RECEIVING APPARATUS, MOBILE STATION APPARATUS, BASE STATION
APPARATUS, AND RADIO RECEIVING METHOD**

(57)    A radio receiving apparatus and radio receiving method are provided that enable the overall apparatus circuit scale to be reduced, and small apparatus size and low apparatus cost to be achieved, without increasing the processing load, together with a mobile station apparatus and base station apparatus equipped with this radio receiving apparatus. A phase control section (290) holds a phase rotation amount of each subcarrier signal due to the delay in the sampling timing of the second antenna with respect to the first antenna, decided in advance according to the number of antennas of the radio receiving apparatus and the subcarrier frequencies. The phase control section (290) performs phase rotation by the held phase rotation amount of each of N subcarrier signals output from an FFT section (240-2) corresponding to the second antenna.

FIG. 3

EP 1 615 364 A1

**Description**

Technical Field

The present invention relates to a radio receiving apparatus, mobile station apparatus, base station apparatus, and radio receiving method, and more particularly to a radio receiving apparatus and radio receiving method having a plurality of receiving antennas for diversity reception and adaptive array reception.

Background Art

In recent years, the use of OFDM (Orthogonal Frequency Division Multiplexing) in radio communication systems has been studied. OFDM is a technology whereby signals are superimposed on a plurality of subcarriers whose frequencies are mutually orthogonal, and has the advantages of improving frequency utilization and being highly resistant to multipath interference. OFDM is mainly used in digital broadcasting and WLANs (Wireless Local Area Networks), and is expected to be used in a wider range of application areas in the future.

While OFDM offers high frequency utilization and good resistance to multipath interference, as stated above, it is thought that the effects of fading can be reduced, and more precise radio communication can be achieved, by additional combination with diversity reception or adaptive array reception.

Generally, a radio receiving apparatus that performs diversity reception or adaptive array reception has a plurality of antennas. This kind of radio receiving apparatus has, for each receiving antenna, a receiving RF circuit that performs radio reception processing such as down-conversion and A/D (Analogue/Digital) conversion on a radio frequency (RF) signal received by the receiving antenna. Therefore, the more receiving antennas there are, the greater is the number of receiving RF circuits, with a resulting increase in the circuit scale of the overall receiving section of the radio receiving apparatus including the receiving antennas and receiving RF circuits.

Heretofore, in order to reduce the circuit scale of the receiving section, a radio receiving apparatus has been thought of that switches connection between a plurality of receiving antennas and a single receiving RF circuit by means of a switch and executes radio reception processing in a time series on signals received by all receiving antennas by means of the single receiving RF circuit (see, for example, FIG.1 of Unexamined Japanese Patent Publication No.2001-127678).

This radio receiving apparatus distributes signals that have undergone radio reception processing to the respective receiving antennas by means of a switch again, performs filtering processing and interpolation on the respective distributed signals by means of an LPF (Low Pass Filter) or the like, combines the obtained interpolated signals, and obtains receive data.

However, a problem with the above-described conventional radio receiving apparatus is that, although the circuit scale of the overall receiving section including the receiving antennas and receiving RF circuits can be reduced, it is necessary to newly provide other circuitry such as interpolation circuitry for each receiving antenna.

Therefore, with the above-described conventional radio receiving apparatus, while the circuit scale of the overall receiving section is reduced, the scale of circuitry other than receiving section circuitry increases. The increase in circuit scale leads to increased apparatus size and cost.

Furthermore, with the above-described interpolation circuits, it is necessary to increase the amount of filtering processing by means of LPFs and so forth in order to maintain interpolation precision at or above a given level.

Disclosure of Invention

It is an object of the present invention to provide a radio receiving apparatus and radio receiving method that enable the overall apparatus circuit scale to be reduced, and small apparatus size and low apparatus cost to be achieved, without increasing the processing load, together with a mobile station apparatus and base station apparatus equipped with this radio receiving apparatus.

According to one aspect of the present invention, a radio receiving apparatus has a plurality of antennas that receive at mutually different timings an identical signal that includes a plurality of subcarrier signals whose frequencies differ mutually; a receiving section that performs radio reception processing in a time series on the received signals of the plurality of antennas; a conversion section that performs orthogonal conversion of the signals that have undergone radio reception processing in the time series, and obtains a plurality of subcarrier signals included in the received signals of the plurality of antennas; and a control section that performs phase rotation of a plurality of subcarrier signals included in the received signal of at least one antenna in accordance with phase rotation due to differences of reception timing of the plurality of antennas.

In the above-described radio receiving apparatus, preferably, the control section includes a channel estimation section that estimates amplitude variation and phase rotation due to the propagation path environment of the aforementioned signal, and performs phase rotation of the plurality of subcarrier signals in accordance with the estimated phase rotation and phase rotation due to differences of reception timing of the plurality of antennas.

In the above-described radio receiving apparatus, preferably, the control section performs phase rotation of the plurality of subcarrier signals corresponding to an antenna other than a first antenna that receives the aforementioned signal first among the plurality of antennas in accordance with the reception timing delay time with respect to the reception timing of that first antenna.

In the above-described radio receiving apparatus, preferably, the control section holds in advance phase rotation amounts determined according to the frequencies of the plurality of subcarrier signals.

In the above-described radio receiving apparatus, preferably, the receiving section has a first switch that switches the plurality of antennas; a radio reception processing section that performs radio reception processing successively on a signal output from the first switch; and a second switch that distributes a signal that has undergone radio reception processing in correspondence with the antenna that received that signal.

The above-described radio receiving apparatus preferably has a combining section that combines subcarrier signals of the same frequency after phase rotation; and a despreading section that despreads an obtained combined signal using the same spreading code as used in the communicating station.

The above-described radio receiving apparatus preferably further has a selection section that selects a subcarrier signal corresponding to an antenna with the best reception conditions among the plurality of antennas after phase rotation; and a despreading section that despreads an obtained selected signal using the same spreading code as used in the communicating station.

According to another aspect of the present invention, a mobile station apparatus has the above-described radio receiving apparatus.

According to yet another aspect of the present invention, a base station apparatus has the above-described radio receiving apparatus.

According to yet another aspect of the present invention, a radio receiving method is used in a radio receiving apparatus equipped with a plurality of antennas, and has a step of receiving from the plurality of antennas at mutually different timings an identical signal that includes a plurality of subcarrier signals whose frequencies differ mutually; a step of performing radio reception processing in a time series on the received signals of the plurality of antennas; a step of performing orthogonal conversion of the signals that have undergone radio reception processing in the time series, and obtaining a plurality of subcarrier signals included in the received signals of the plurality of antennas; and a step of performing phase rotation of a plurality of subcarrier signals included in the received signal of at least one antenna in accordance with phase rotation due to differences of reception timing of the plurality of antennas.

Brief Description of Drawings

FIG.1A is a drawing for explaining the principle of an embodiment of the present invention;
FIG.1B is a drawing for explaining the principle of an embodiment of the present invention;
FIG.2 is a block diagram showing the configuration of a radio transmitting apparatus used in Embodiment 1;
FIG.3 is a block diagram showing the configuration of a radio receiving apparatus according to Embodiment 1;
FIG.4 is a block diagram showing the configuration of a radio receiving apparatus according to Embodiment 2;
FIG.5 is a block diagram showing the configuration of a radio transmitting apparatus used in Embodiment 3; and
FIG.6 is a block diagram showing the configuration of a radio receiving apparatus according to Embodiment 3.

Best Mode for Carrying out the Invention

The present inventors considered the fact that, in OFDM in which a signal is transmitted superimposed on a plurality of subcarriers whose frequencies are mutually orthogonal, since orthogonal conversion such as FFT (Fast Fourier Transform) or DFT (Discrete Fourier Transform) processing is performed on a received signal, a received signal sampled in a time series (that is, on the time axis) is rearranged on the frequency axis.

The present inventors then arrived at the present invention by noting that, when the sampling timings of received signals received by a plurality of antennas are shifted, after FTT processing this sampling timing shift appears as phase rotation of subcarriers of each frequency.

That is to say, the gist of the present invention is that, by shifting the sampling timings of a plurality of receiving antennas, radio reception processing is performed on the signal received by each receiving antenna by means of a single receiving RF circuit, and after Fourier transform processing has been performed on a signal that has undergone radio reception processing, the original phase rotation is restored according to the sampling timing shift.

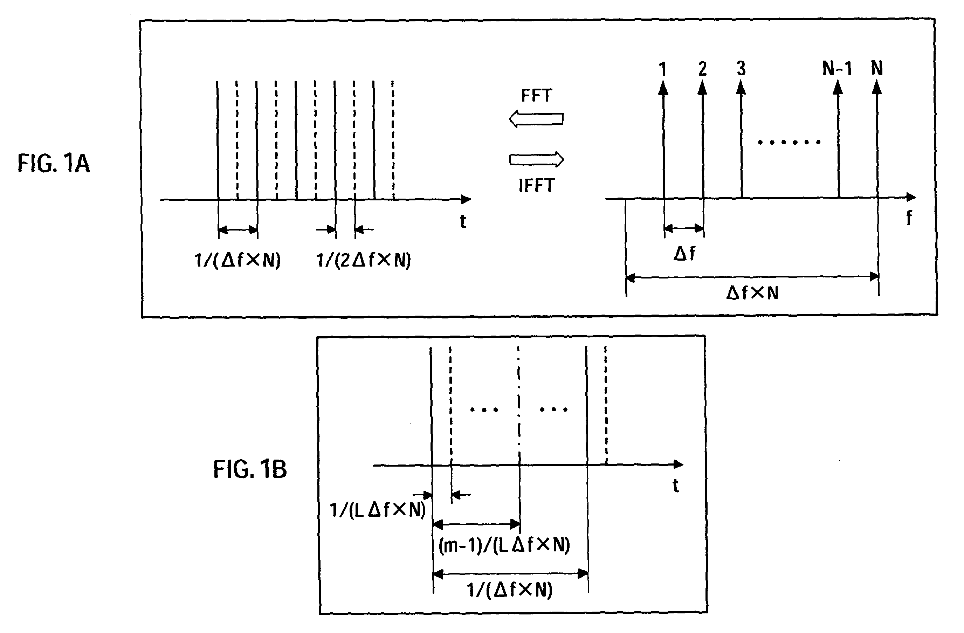

The principle of the present invention will now be explained with reference to FIG. 1A and FIG. 1B. First, a case in which there are two receiving antennas will be described.

Generally, in OFDM, when a signal is transmitted using N mutually orthogonal subcarriers 1 through N, if the frequency interval of subcarriers 1 through N is designated $\Delta f$, the bandwidth of the OFDM signal is $(\Delta f \times N)$, as shown in FIG.1A. When a radio receiving apparatus receives this OFDM signal, if there is one antenna the signal is received with a sampling cycle of $1/(\triangle f \times N)$. That is to say, the OFDM signal is sampled every $1/(\Delta f \times N)$.

When reception is performed by switching a plurality of receiving antennas, one receiving antenna samples the OFDM signal at the above-described sampling cycle, and the other receiving antennas sample the OFDM signal at timings delayed by respective predetermined times.

Here, as there are two receiving antennas, if the delay time of one antenna with respect to the other antenna is designated $\tau$, $\tau$ can be expressed as one-half of the above-described sampling cycle - that is, by Equation 1 below.

$$\tau = 1/(2 \Delta f \times N) \qquad \ldots \text{Equation 1}$$

In OFDM, the transmitting side transmits an OFDM signal with data arranged on the time axis by performing IFFT (Inverse Fast Fourier Transform) processing on data corresponding to a plurality of subcarriers, and the receiving side samples an OFDM signal on the time axis and rearranges the data on the frequency axis again by performing FFT processing. This FFT and IFFT processing can be represented as shown in Equation 2 below.

$$f(t) \leftrightarrow F(\omega) \quad \ldots \text{Equation 2}$$

In Equation 2, conversion from the left side to the right side is an FFT, and conversion from the right side to the left side is an IFFT. Term $\omega$ is angular frequency, which has the relationship shown in Equation 3 to frequency f.

$$\omega = 2 \pi f \qquad \ldots \text{Equation 3}$$

When there are two receiving antennas, as described above, one antenna samples an OFDM signal delayed by delay time $\tau$ relative to the other antenna. In this case, Equation 2 can be expressed as shown in Equation 4 below.

$$f(t-\tau) \leftrightarrow F(\omega) e^{-j \omega \tau} \quad \ldots \text{Equation 4}$$

In Equation 4, j is an imaginary unit. Comparing Equation 2 and Equation 4, it can be seen that delay time $\tau$ is converted to phase rotation amount $e^{-j\omega\tau}$. Substituting Equation 1 and Equation 3 for this phase rotation amount $e^{-j\omega\tau}$ gives Equation 5 below.

$$e^{-j \omega \tau} = \exp[-j \times 2 \pi f \times 1/(2 \Delta f \times N)] \quad \ldots \text{Equation 5}$$

Since all terms except frequency f on the right side of Equation 5 are constants, it can be seen that the phase rotation,amount due to sampling timing delay differs for each OFDM signal subcarrier, and depends only on the frequency of each of subcarriers 1 through N.

Specifically, if the frequency of subcarrier 1 is designated $\Delta f$, the frequency of subcarrier 2 is designated $2\Delta f$, the frequency of subcarrier 3 is designated $3\Delta f$, ... , and the frequency of subcarrier N is designated $N\Delta f$, the phase rotation amounts for each of subcarriers 1 through N are $\exp[-j\Pi/N]$, $\exp[-j2n/N]$, $\exp[-j3\Pi/N]$, ..., $\exp[-j\Pi]$, respectively.

Therefore, even when the subcarrier timings of a plurality of receiving antennas are shifted, the same kind of handling is possible as when sampling is performed simultaneously by each receiving antenna by restoring phase rotation resulting from the sampling timing shift to its original state by a phase rotation amount that is known for each subcarrier.

The sampling cycle of one antenna is also above-described $1/(\Delta f \times N)$ when there are L receiving antennas, as shown in FIG.1B. When there are L receiving antennas, the sampling timing of each receiving antenna is delayed by $1/(L\Delta f x N)$ obtained by dividing this sampling cycle by L.

Specifically, for the second receiving antenna, sampling delayed by 1/ (L∆fxN) with respect to the sampling timing of the first receiving antenna is performed, and for the m' th receiving antenna, sampling delayed by (m-1) / (L∆f×N) with respect to the sampling timing of the first receiving antenna is performed.

Therefore, based on the same reasoning as in the case of two receiving antennas, rotation amount $e^{-j\omega\tau}$ due to the sampling timing delay of the m' th receiving antenna can be expressed by Equation 6 below.

$$e^{-j\omega\tau} = \exp[-j \times 2\pi f \times (m-1)/(L\Delta f \times N)] \quad \dots \text{ Equation 6}$$

As can be seen from Equation 6, when there are L receiving antennas, since the phase rotation amount of each subcarrier is known for each receiving antenna, the same kind of handling is possible as when sampling is performed simultaneously by each receiving antenna by restoring the phase rotation of each subcarrier obtained by performing FFT processing on the receiving side to its original state.

With reference now to the accompanying drawings, embodiments of the present invention will be explained in detail below.

(Embodiment 1)

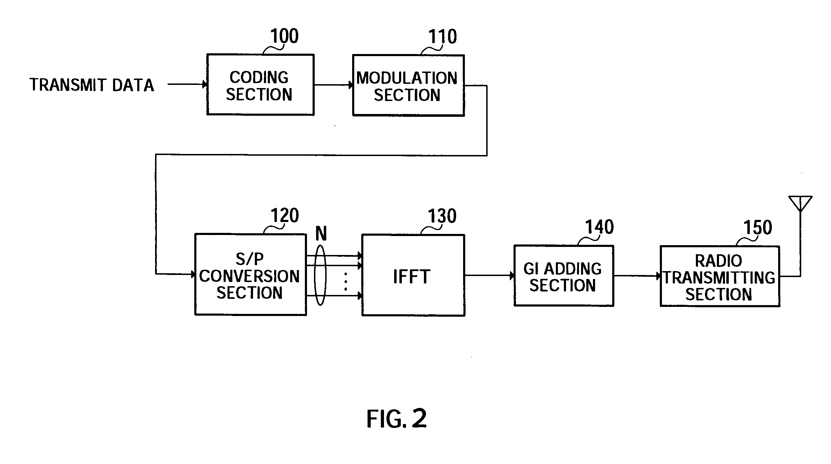

FIG.2 is a block diagram showing the configuration of a radio transmitting apparatus used in Embodiment 1 of the present invention. The radio transmitting apparatus shown in FIG.2 has a coding section 100, a modulation section 110, an S/P (Serial-Parallel) conversion section 120, an IFFT section 130, a GI (Guard Interval) adding section 140, and a radio transmitting section 150.

Transmit data undergoes error correction coding by coding section 100 and is modulated by modulation section 110. The modulated data then undergoes S/P conversion by S/P conversion section 120 and N streams of parallel data are output.

The N streams of parallel data undergo inverse fast Fourier transform processing by IFFT section 130, and the data of the corresponding streams are superimposed on N mutually orthogonal subcarriers. A guard interval to prevent inter-symbol interference is then added by GI adding section 140, and an OFDM signal is generated.

The generated OFDM signal undergoes predetermined radio transmission processing (such as D/A conversion and up-conversion) by radio transmitting section 150, and is transmitted via a transmitting antenna.

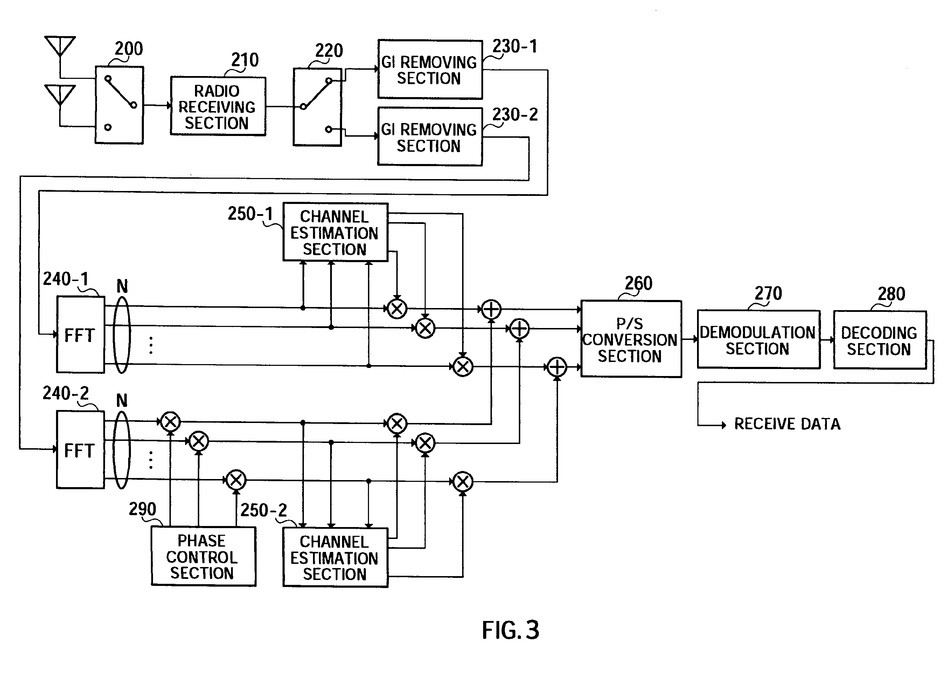

FIG.3 is a block diagram showing the configuration of a radio receiving apparatus according to this embodiment. The radio receiving apparatus shown in FIG. 3 has a switch 200, a radio receiving section 210, a switch 220, GI removing sections 230-1 and 230-2, FFT sections 240-1 and 240-2, channel estimation sections 250-1 and 250-2, a P/S conversion section 260, a demodulation section 270, a decoding section 280, and a phase control section 290. The radio receiving apparatus shown in FIG. 3 has a configuration comprising two receiving antennas, but the present invention is not limited to this, and three or more receiving antennas may be used. In the following description, the two receiving antennas are referred to as "the first antenna" and "the second antenna" respectively. A radio receiving apparatus according to this embodiment is used installed in a mobile station apparatus or base station apparatus in a mobile communication system.

Switch 200 switches between the two receiving antennas, and outputs a received signal from each receiving antenna to radio receiving section 210. As explained above, the sampling cycle of each receiving antenna is the reciprocal of the bandwidth of an OFDM signal, and switch 200 switches the receiving antenna at intervals equivalent to half of this sampling cycle. In other words, switch 200 delays the sampling timing of the second antenna by a period equivalent to half the sampling cycle with respect to the sampling timing of the first antenna.

In this embodiment, as there are two receiving antennas, switching by switch 200 is performed every half sampling cycle, but when there are L receiving antennas (where L is an integer greater than 2), switching by switch 200 is performed at intervals equivalent to 1/L of the sampling cycle.

Radio receiving section 210 includes receiving RF circuitry, and executes predetermined radio reception processing (such as up-conversion and A/D conversion) on a signal input from switch 200.

Switch 220 switches in synchronization with switch 200, and outputs a signal that has undergone radio reception processing to GI removing section 230-1 corresponding to the first antenna or GI removing section 230-2 corresponding to the second antenna.

GI removing sections 230-1 and 230-2 remove a guard interval from the signal output from switch 220.

FFT sections 240-1 and 240-2 perform fast Fourier transform processing on a signal that has undergone guard interval removal, and output signals corresponding to N subcarriers (hereinafter referred to as "subcarrier signals").

Channel estimation sections 250-1 and 250-2 perform channel estimation that estimates signal distortion due to the effects of the propagation paths of the subcarrier signals for signals received from the first antenna and second antenna respectively, and calculate a channel estimate for each subcarrier signal.

P/S conversion section 260 performs P/S conversion on N signal streams obtained by combining subcarrier signals corresponding to the first antenna and second antenna respectively, and outputs serial data.

Demodulation section 270 demodulates the serial data output from P/S conversion section 260.

Decoding section 280 performs error correction decoding on the demodulated data and outputs receive data.

Phase control section 290 holds a phase rotation amount of each subcarrier signal due to the delay in the sampling timing of the second antenna with respect to the first antenna, decided in advance according to the number of antennas of the radio receiving apparatus and the subcarrier frequencies. Phase control section 290 performs phase rotation by the held phase rotation amount of each of the N subcarrier signals output from FFT section 240-2 corresponding to the second antenna.

Having the N subcarrier signals phase-rotated by phase control section 290 eliminates the effect of sampling timing delay of the second antenna with respect to the first antenna due to switching by switch 200, and allows the same kind of handling as when the first antenna and second antenna perform sampling simultaneously.

The operation of a radio receiving apparatus configured as described above will now be explained.

First, switch 200 and switch 220 are both connected to the first antenna side, and a signal received from the first antenna undergoes predetermined radio reception processing by radio receiving section 210. When a period equivalent to one-half of the sampling cycle has elapsed after switch 200 and switch 220 were connected to the first antenna side, switch 200 and switch 220 are both switched so as to be connected to the second antenna side. Then predetermined radio reception processing is performed by radio receiving section 210 on the signal received from the second antenna.

Switching between the two receiving antennas in this way delays the sampling timing of the second antenna by half a sampling cycle with respect to the first antenna, but also makes it possible to use only one radio receiving section 210 containing receiving RF circuitry, and enables small apparatus size and low apparatus cost to be achieved.

A guard interval portion is removed from a signal received from the first antenna by GI removing section 230-1, N sampling signals that have undergone guard interval removal undergo fast Fourier transform processing by FFT section 240-1, and N subcarrier signals are output.

Channel estimates of the subcarrier signals are then calculated by channel estimation section 250-1, and the subcarrier signals are multiplied by the calculated channel estimates. By this means, propagation path environment effects can be eliminated.

On the other hand, a guard interval portion is removed from a signal received from the second antenna by GI removing section 230-2, N sampling signals that have undergone guard interval removal undergo fast Fourier transform processing by FFT section 240-2, and N subcarrier signals are output. By means of this fast Fourier transform processing, the sampling timing delay of the second antenna is converted to phase rotation of each subcarrier signal.

The subcarrier signals output from FFT section 240-2 are multiplied by the phase rotation amounts held for N subcarriers by phase control section 290. As stated above, these phase rotation amounts depend only on the number of receiving antennas and the frequencies of the N subcarriers, and can therefore be calculated beforehand. By multiplying subcarrier signals by such known phase rotation amounts, phase rotation due to the sampling timing delay of the second antenna can be restored, and the first antenna and second antenna can be regarded as performing sampling simultaneously.

Also, since the amount of processing involved in phase rotation is small compared with processing such as filtering and only simple baseband processing is performed, the circuit scale is not increased and the processing load is small.

Channel estimates of subcarrier signals that have undergone phase rotation are then calculated by channel estimation section 250-2, and the subcarrier signals are multiplied by the calculated channel estimates. By this means, propagation path environment effects can be eliminated.

Following channel estimation, subcarrier signals corresponding to the first antenna and second antenna are combined. The N parallel signal streams obtained as a result undergo P/S conversion by P/S conversion section 260, and serial data is output.

The output serial data is demodulated by demodulation section 270 and undergoes error correction decoding by decoding section 280, and receive data is obtained.

Thus, according to this embodiment, received signal sampling is performed by switching a plurality of receiving antennas, radio reception processing is performed by a single radio receiving section, the signals received from the respective receiving antennas undergo fast Fourier transform processing, and the obtained plurality of subcarrier signals are phase-rotated by a known phase rotation amount, thereby enabling the effect of sampling delay of the antennas resulting from receiving antenna switching to be eliminated, and enabling the overall apparatus circuit scale to be reduced and small apparatus size and low apparatus cost to be achieved without increasing the processing load even when only one radio receiving section is provided for a plurality of receiving antennas.

Also, according to this embodiment, subcarrier signals corresponding to one antenna are phase-rotated in accordance with the reception timing delay time with respect to another antenna that first receives a signal, enabling a difference in the reception timings of the antennas to be compensated for accurately.

Furthermore, according to this embodiment, phase rotation amounts determined according to the frequencies of a plurality of subcarrier signals are held beforehand, enabling the processing load for performing phase rotation to be kept small.

Moreover, according to this embodiment, signals output by switching between a plurality of antennas are subject to radio reception processing successively, and signals that have undergone radio reception processing are again distributed to the respective antennas, enabling the reception timings of a plurality of antennas to be controlled with a high degree of precision, and making it possible to perform radio reception processing for a plurality of antennas with a single processing section.

(Embodiment 2)

A feature of Embodiment 2 of the present invention is that phase rotation due to a difference in sampling timings is performed at the same time as channel estimation phase rotation.

The configuration of a radio transmitting apparatus used in this embodiment is the same as in Embodiment 1 (FIG.2) , and therefore a description thereof is omitted.

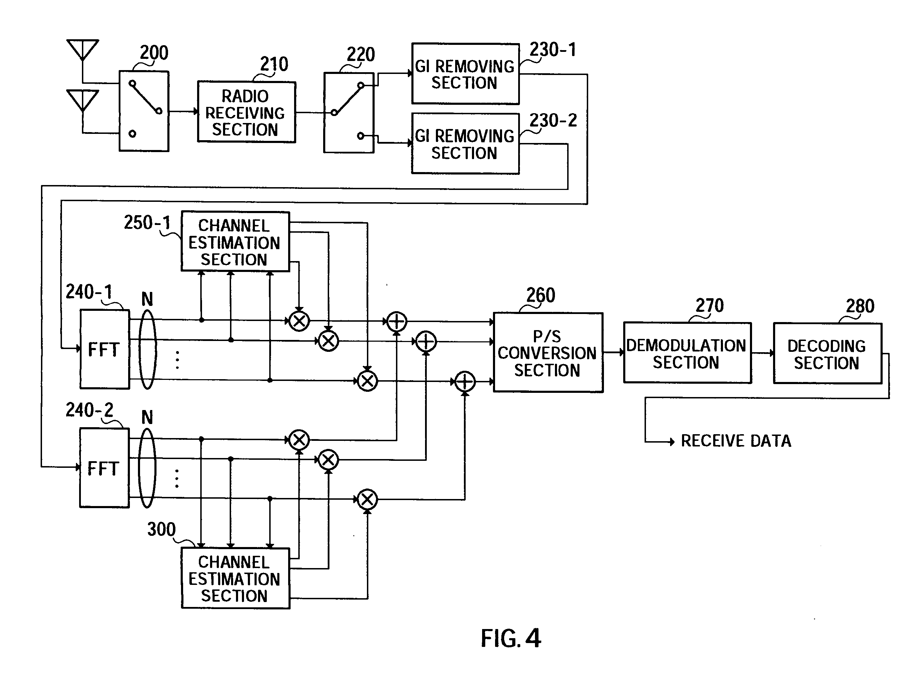

FIG.4 is a block diagram showing the configuration of a radio receiving apparatus according to this embodiment. Parts of the radio receiving apparatus shown in FIG.4 identical to those of the radio receiving apparatus shown in FIG.4 are assigned the same codes as in FIG.3 and descriptions thereof are omitted. A radio receiving apparatus according to this embodiment is used installed in a mobile station apparatus or base station apparatus in a mobile communication system.

The radio receiving apparatus shown in FIG.4 has a switch 200, a radio receiving section 210, a switch 220, GI removing sections 230-1 and 230-2, FFT sections 240-1 and 240-2, a channel estimation section 250-1, a P/S conversion section 260, a demodulation section 270, a decoding section 280, and a channel estimation section 300. The radio receiving apparatus shown in FIG.4 has a configuration comprising two receiving antennas, but the present invention is not limited to this, and three or more receiving antennas may be used.

For a signal received from the second antenna, channelestimationsection300simultaneouslycalculates channel variation (that is, amplitude variation and phase rotation) due to the propagation path environment of the subcarrier signals, and a phase rotation amount due to delay with respect to the sampling timing of the first antenna.

Generally, channel estimate compensates for amplitude variation and phase rotation due to the propagation path environment. Channel estimation section 300 of this embodiment calculates a channel estimate that can simultaneously compensate for phase rotation on a propagation path estimated by channel estimation and phase rotation due to a sampling timing delay.

The operation of a radio receiving apparatus configured as described above will now be explained.

First, as in Embodiment 1, switch 200 and switch 220 are both connected to the first antenna side, and a signal received from the first antenna undergoes predetermined radio reception processing by radio receiving section 210. When a period equivalent to one-half of the sampling cycle has elapsed after switch 200 and switch 220 were connected to the first antenna side, switch 200 and switch 220 are both switched so as to be connected to the second antenna side. Then predetermined radio reception processing is performed by radio receiving section 210 on the signal received from the second antenna.

Switching between the two receiving antennas in this way delays the sampling timing of the second antenna by half a sampling cycle with respect to the first antenna, but also makes it possible to use only one radio receiving section 210 containing receiving RF circuitry, and enables small apparatus size and low apparatus cost to be achieved.

A guard interval portion is removed from a signal received from the first antenna by GI removing section 230-1, N sampling signals that have undergone guard interval removal undergo fast Fourier transform processing by FFT section 240-1, and N subcarrier signals are output.

Channel estimates of the subcarrier signals are then calculated by channel estimation section 250-1, and the subcarrier signals are multiplied by the calculated channel estimates. By this means, propagation path environment effects can be eliminated.

On the other hand, a guard interval portion is removed from a signal received from the second antenna by GI removing section 230-2, N subcarrier signals that have undergone guard interval removal undergo fast Fourier transform processing by FFT section 240-2, and N subcarrier signals are output. By means of this fast Fourier transform processing, the sampling timing delay of the second antenna is converted to phase rotation of each subcarrier signal.

Channel estimates of the subcarrier signals are then calculated by channel estimation section 300, and the subcarrier signals are multiplied by the calculated channel estimates. Here, a calculated channel estimate is a value for compensating for amplitude variation and phase rotation, and with regard to phase rotation, a channel estimate that compensates for both phase rotation due to the propagation path environment and phase rotation due to sampling timing delay is calculated by channel estimation section 300.

Specifically, for example, phase rotation of each subcarrier signal due to sampling timing delay is added to phase rotation due to the propagation path environment obtained by normal channel estimation, and a channel estimate is calculated for each subcarrier signal.

Consequently, unlike Embodiment 1, circuitry for controlling only phase rotation due to sampling timing delay is unnecessary, and this phase rotation is compensated for at the same time as normal channel estimation. Therefore, the circuit scale can be reduced to an even greater extent than in Embodiment 1.

Following channel estimation, subcarrier signals corresponding to the first antenna and second antenna are combined. The N parallel signal streams obtained as a result undergo P/S conversion by P/S conversion section 260, and serial data is output.

The output serial data is demodulated by demodulation section 270 and undergoes error correction decoding by decoding section 280, and receive data is obtained.

Thus, according to this embodiment, received signal sampling is performed by switching a plurality of receiving antennas, radio reception processing is performed by a single radio receiving section, the signals received from the respective receiving antennas undergo fast Fourier transform processing, and the obtained plurality of subcarrier signals are phase-rotated by a known phase rotation amount at the same time as channel estimation, thereby enabling the effect of sampling delay of the antennas resulting from receiving antenna switching to be eliminated, and enabling the overall apparatus circuit scale to be further reduced and small apparatus size and low apparatus cost to be achieved without increasing the processing load even when only one radio receiving section is provided for a plurality of receiving antennas.

(Embodiment 3)

A feature of Embodiment 3 of the present invention is that a radio receiving apparatus of the present invention is used in a mobile communication system that uses the CDMA method.

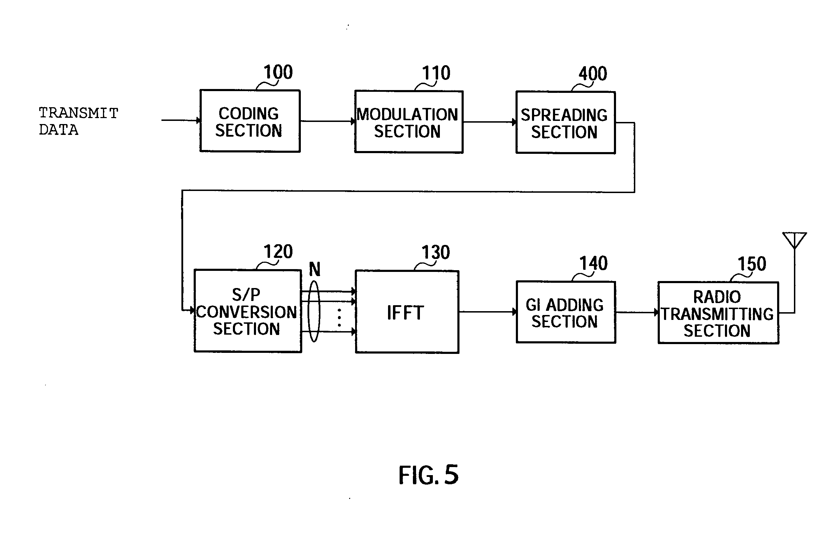

FIG.5 is a block diagram showing the configuration of a radio transmitting apparatus used in this embodiment. Parts of the radio transmitting apparatus shown in FIG. 5 identical to those of the radio transmitting apparatus shown in FIG.2 are assigned the same codes as in FIG.2 and detailed descriptions thereof are omitted. The radio transmitting apparatus shown in FIG.5 has a coding section 100, a modulation section 110, a spreading section 400, an S/P conversion section 120, an IFFT section 130, a GI adding section 140, and a radio transmitting section 150.

Transmit data that has undergone error correction coding by coding section 100 and has been modulated by modulation section 110 is spread by spreading section 400 using a predetermined spreading code. The spread data then undergoes S/P conversion by S/P conversion section 120 and N streams of parallel data are output.

The N streams of parallel data undergo inverse fast Fourier transform processing by IFFT section 130, a guard interval is added by GI adding section 140, and an OFDM signal is generated.

The generated OFDM signal undergoes predetermined radio transmission processing (such as D/A conversion and up-conversion) by radio transmitting section 150, and is transmitted via the transmitting antenna.

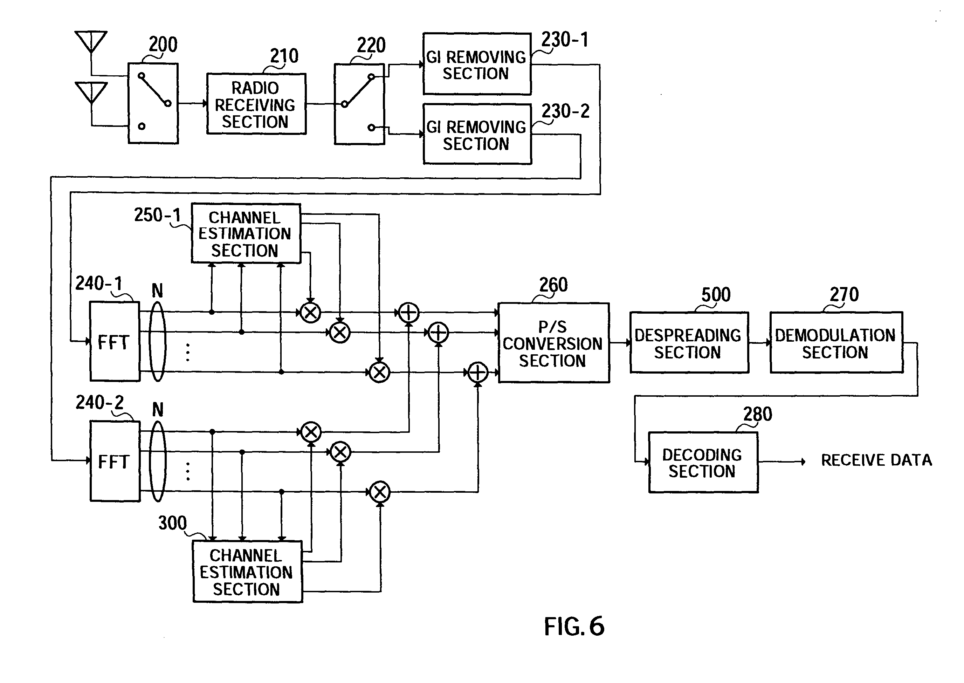

FIG. 6 is a block diagram showing the configuration of a radio receiving apparatus according to this embodiment. Parts of the radio receiving apparatus shown in FIG.6 identical to those of the radio receiving apparatuses shown in FIG.3 and FIG.4 are assigned the same codes as in FIG.3 and FIG. 4, and descriptions thereof are omitted. A radio receiving apparatus according to this embodiment is used installed in a mobile station apparatus or base station apparatus in a mobile communication system.

The radio receiving apparatus shown in FIG.6 has a switch 200, a radio receiving section 210, a switch 220, GI removing sections 230-1 and 230-2, FFT sections 240-1 and 240-2, a channel estimation section 250-1, a P/S conversion section 260, a demodulation section 270, a decoding section 280, a channel estimation section 300, and a despreading section 500. The radio receiving apparatus shown in FIG.6 has a configuration comprising two receiving antennas, but the present invention is not limited to this, and three or more receiving antennas may be used.

Despreading section 500 despreads serial data resulting from P/S conversion using the same spreading code as used by spreading section 400 of the radio transmitting apparatus shown in FIG.5.

The operation of a radio receiving apparatus configured as described above will now be explained.

First, as in Embodiment 1, switch 200 and switch 220 are both connected to the first antenna side, and a signal received from the first antenna undergoes predetermined radio reception processing by radio receiving section 210. When a period equivalent to one-half of the sampling cycle has elapsed after switch 200 and switch 220 were connected to the first antenna side, switch 200 and switch 220 are both switched so as to be connected to the second antenna side. Then predetermined radio reception processing is performed by radio receiving section 210 on the signal received from the second antenna.

Switching between the two receiving antennas in this way delays the sampling timing of the second antenna by half a sampling cycle with respect to the first antenna, but also makes it possible to use only one radio receiving section 210 containing receiving RF circuitry, and enables small apparatus size and low apparatus cost to be achieved.

A guard interval portion is removed from a signal received from the first antenna by GI removing section 230-1, N sampling signals that have undergone guard interval removal undergo fast Fourier transform processing by FFT section 240-1, and N subcarrier signals are output.

Channel estimates of the subcarrier signals are then calculated by channel estimation section 250-1, and the subcarrier signals are multiplied by the calculated channel estimates. By this means, propagation path environment effects can be eliminated.

On the other hand, a guard interval portion is removed from a signal received from the second antenna by GI removing section 230-2, N sampling signals that have undergone guard interval removal undergo fast Fourier transform processing by FFT section 240-2, and N subcarrier signals are output. By means of this fast Fourier transform processing, the sampling timing delay of the second antenna is converted to phase rotation of each subcarrier signal.

Channel estimates of the subcarrier signals are then calculated by channel estimation section 300, and the subcarrier signals are multiplied by the calculated channel estimates. Here, a calculated channel estimate is a value for compensating for amplitude variation and phase rotation, and with regard to phase rotation, a channel estimate that compensates for both phase rotation due to the propagation path environment and phase rotation due to sampling timing delay is calculated by channel estimation section 300.

Following channel estimation, subcarrier signals corresponding to the first antenna and second antenna are combined. The N parallel signal streams obtained as a result undergo P/S conversion by P/S conversion section 260, and serial data is output.

The output serial data is despread by despreading section 500, demodulated by demodulation section 270, and undergoes error correction decoding by decoding section 280, and receive data is obtained.

Thus, according to this embodiment, switching of a plurality of receiving antennas is performed and a received signal spread with a predetermined spreading code is sampled, radio reception processing is performed by a single radio receiving section, the signals received from the respective receiving antennas undergo fast Fourier transform processing, and the obtained plurality of subcarrier signals are phase-rotated by a known phase rotation amount at the same time as channel estimation, and despread using the same spreading code as used on the transmitting side, so that, even in a mobile communication system that uses the CDMA method, the effect of sampling delay of the antennas resulting from receiving antenna switching can be eliminated and the overall apparatus circuit scale can be further reduced and small apparatus size and low apparatus cost can be achieved without increasing the processing load even when only one radio receiving section is provided for a plurality of receiving antennas.

Also, according to this embodiment, subcarrier signals of the same frequency are combined after phase rotation, and are despread using the same spreading code as used by the communicating station, enabling the power of each subcarrier signal to be increased and demodulation errors to be reduced.

In the above embodiments, configurations have been described whereby subcarrier signals corresponding to two receiving antennas are combined after channel estimation, but a configuration may also be used whereby, for example, subcarrier signals corresponding to the receiving antenna with the best reception conditions are selected by measuring the reception level, and undergo P/S conversion. By so doing, subcarrier signals corresponding to the receiving antenna that has the best reception conditions of a plurality of receiving antennas can be selected after phase rotation, and despread using the same spreading code as used by the communicating party, enabling modulation errors to be reduced by eliminating the effects of subcarrier signals received by an antenna with poor reception conditions, and also enabling the overall apparatus circuit scale to be reduced and small apparatus size and low apparatus cost to be achieved without increasing the processing load even in a mobile communication system that uses the CDMA method.

In the above embodiments, configurations have been described whereby subcarrier signals corresponding to two receiving antennas are combined after channel estimation, but a configuration may also be used whereby weighting is performed on subcarrier signals before they are combined.

In the above embodiments, configurations have been described whereby a transmitting apparatus has a coding section and a receiving apparatus has a decoding section, but configurations may also be used that do not have such a coding section and decoding section.

In above Embodiment 3, a configuration has been described whereby despreading is performed after subcarrier signals corresponding to two receiving antennas are combined, but a configuration may also be used whereby despreading is performed on subcarrier signals corresponding to two receiving antennas, and then the despread signals are combined.

As described above, according to the present invention the overall apparatus circuit scale can be reduced, and small apparatus size and low apparatus cost can be achieved, without increasing the processing load.

This application is based on Japanese Patent Application No.2003-108306 filed on April 11, 2003, the entire content of which is expressly incorporated by reference herein.

Industrial Applicability

The present invention is applicable to a mobile station apparatus, base station apparatus, or the like, in a mobile communication system.

**Claims**

1. A radio receiving apparatus comprising:

   a plurality of antennas that receive at mutually different timings an identical signal that includes a plurality of subcarrier signals whose frequencies differ mutually;
   a receiving section that performs radio reception processing in a time series on received signals of said plurality of antennas;
   a conversion section that performs orthogonal conversion of signals that have undergone radio reception processing in said time series, and obtains a plurality of subcarrier signals included in received signals of said plurality of antennas; and
   a control section that performs phase rotation of a plurality of subcarrier signals included in a received signal of at least one antenna in accordance with phase rotation due to differences of reception timing of said plurality of antennas.

2. The radio receiving apparatus according to claim 1, wherein said control section:

   includes a channel estimation section that estimates amplitude variation and phase rotation due to a propagation path environment of said signal; and
   performs phase rotation of said plurality of subcarrier signals in accordance with estimated phase rotation and phase rotation due to differences of reception timing of said plurality of antennas.

3. The radio receiving apparatus according to claim 1, wherein said control section performs phase rotation of said plurality of subcarrier signals corresponding to an antenna other than a first antenna that receives said signal first among said plurality of antennas in accordance with a reception timing delay time with respect to reception timing of said first antenna.

4. The radio receiving apparatus according to claim 1, wherein said control section holds in advance phase rotation amounts determined according to frequencies of said plurality of subcarrier signals.

5. The radio receiving apparatus according to claim 1, wherein said receiving section comprises:

   a first switch that switches said plurality of antennas;
   a radio reception processing section that performs radio reception processing successively on a signal output from said first switch; and
   a second switch that distributes a signal that has undergone radio reception processing in correspondence with an antenna that received that signal.

6. The radio receiving apparatus according to claim 1, further comprising:

   a combining section that combines subcarrier signals of an identical frequency after phase rotation; and
   a despreading section that despreads an obtained combined signal using a spreading code identical to a spreading code used in a communicating station.

7. The radio receiving apparatus according to claim 1, further comprising:

   a selection section that selects a subcarrier signal corresponding to an antenna with the best reception conditions among said plurality of antennas after phase rotation; and
   a despreading section that despreads an obtained selected signal using a spreading code identical to a spreading code used in a communicating station.

8. A mobile station apparatus comprising the radio receiving apparatus according to any one of claims 1 through 7.

9. A base station apparatus comprising the radio receiving apparatus according to any one of claims 1 through 7.

**10.** A radio receiving method used in a radio receiving apparatus equipped with a plurality of antennas, said radio receiving method comprising:

a step of receiving from said plurality of antennas at mutually different timings an identical signal that includes a plurality of subcarrier signals whose frequencies differ mutually;
a step of performing radio reception processing in a time series on received signals of said plurality of antennas;
a step of performing orthogonal conversion of signals that have undergone radio reception processing in a time series, and obtaining a plurality of subcarrier signals included in received signals of said plurality of antennas; and
a step of performing phase rotation of a plurality of subcarrier signals included in a received signal of at least one antenna in accordance with phase rotation due to differences of reception timing of said plurality of antennas.

FIG. 1A

$1/(\Delta f \times N)$    $1/(2\Delta f \times N)$

$\Delta f$

$\Delta f \times N$

FIG. 1B

$1/(L\Delta f \times N)$

$(m-1)/(L\Delta f \times N)$

$1/(\Delta f \times N)$

EP 1 615 364 A1

FIG.2

FIG. 3

FIG. 4

EP 1 615 364 A1

TRANSMIT
DATA

**100**
CODING
SECTION

**110**
MODULATION
SECTION

**400**
SPREADING
SECTION

**120**
S/P
CONVERSION
SECTION

N

**130**
IFFT

**140**
GI ADDING
SECTION

**150**
RADIO
TRANSMITTING
SECTION

FIG. 5

FIG. 6

<div align="center">**INTERNATIONAL SEARCH REPORT**</div>

| | International application No. |
|---|---|
| | PCT/JP2004/005110 |

**A. CLASSIFICATION OF SUBJECT MATTER**
Int.Cl⁷ H04J11/00

According to International Patent Classification (IPC) or to both national classification and IPC

**B. FIELDS SEARCHED**

Minimum documentation searched (classification system followed by classification symbols)
Int.Cl⁷ H04J11/00

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-345780 A (Sony Corp.), | 1,2,8-10 |
| Y | 14 December, 2001 (14.12.01), Full text; all drawings (Family: none) | 3-7 |
| Y | JP 02-192325 A (NEC Corp.), 30 July, 1990 (30.07.90), Full text; all drawings (Family: none) | 3,4 |
| Y | JP 2001-308762 A (Pioneer Electronic Corp.), 02 November, 2001 (02.11.01), Full text; all drawings & EP 1148684 A2 | 5. |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 06 July, 2004 (06.07.04) | 20 July, 2004 (20.07.04) |

| Name and mailing address of the ISA/<br>Japanese Patent Office | Authorized officer |
|---|---|
| Facsimile No. | Telephone No. |

Form PCT/ISA/210 (second sheet) (January 2004)

<table>
<tr><td colspan="2" align="center">**INTERNATIONAL SEARCH REPORT**</td><td colspan="2">International application No.<br>PCT/JP2004/005110</td></tr>
</table>

**C (Continuation).   DOCUMENTS CONSIDERED TO BE RELEVANT**

| Category* | Citation of document, with indication, where appropriate, of the relevant passages | Relevant to claim No. |
|---|---|---|
| Y | JP 2001-024618 A   (Matsushita Electric Industrial Co., Ltd.),<br>26 January, 2001 (26.01.01),<br>Full text; all drawings<br>& EP 1065804 A2        & CN 1291017 A<br>& KR 2001015127 A      & KR 371112 B | 6,7 |
| A | JP 2000-036801 A   (NEC Corp.),<br>02 February, 2000 (02.02.00),<br>Full text; all drawings<br>& EP 0975101 A2        & US 6151372 A | 6,7 |
| A | JP 2001-358626 A   (Sony International (Europe) GmbH.),<br>26 December, 2001 (26.12.01),<br>Full text; all drawings<br>& EP 1148659 A1        & US 2001/0033547 A1 | 1-10 |
| A | JP 09-284191 A   (Nippon Hoso Kyokai),<br>31 October, 1997 (31.10.97),<br>Full text; all drawings<br>& JP 3377361 B2 | 1-10 |
| A | JP 2001-086091 A   (Sharp Corp.),<br>30 March, 2001 (30.03.01),<br>Full text; all drawings<br>(Family: none) | 1-10 |
| A | JP 2003-032226 A   (Matsushita Electric Industrial Co., Ltd.),<br>31 January, 2003 (31.01.03),<br>Full text; all drawings<br>(Family: none) | 1-10 |

Form PCT/ISA/210 (continuation of second sheet) (January 2004)